# EUROPEAN PATENT APPLICATION

(11) **EP 4 776 506 A1**
(43) Date of publication of application: **15.07.2026**
(21) Application number: 24862338.1
(22) Date of filing: 23.01.2024
(51) Int. Cl.: H02P 25/22, H02P 27/08

(54) **ROTARY ELECTRIC MACHINE DRIVING DEVICE AND ROTARY ELECTRIC MACHINE DRIVING METHOD**

(30) Priority: 08.09.2023 JP 2023145697
(71) Applicant: MITSUBISHI ELECTRIC CORPORATION, Chiyoda-ku Tokyo 100-8310 (JP)
(72) Inventor: NISHIMURA, Tatsuo, Tokyo 100-8310 (JP)
(74) Representative: Hoffmann Eitle
(86) International application number: PCT/JP2024/001729
(87) International publication number: WO 2025/052681

(57) **Abstract**

A rotary electric machine driving device (1) includes: a plurality of groups of power converters (3) and (4) provided corresponding to respective groups, to convert DC power input from a DC power supply (7) into a phase current, and output the phase current to the stator windings of the respective groups; and a control unit (5) to output a control signal generated on the basis of a carrier wave to control the power converters (3) and (4) of the respective groups, and switch a phase of the carrier wave in each of the groups when a temperature of a part of a rotary electric machine (2) is higher than a threshold temperature.

## Description

### TECHNICAL FIELD

The present disclosure relates to a rotary electric machine driving device and a rotary electric machine driving method.

### BACKGROUND ART

As a rotary electric machine driving device, a multiple drive technique for driving one rotary electric machine by a plurality of groups of power conversion devices is generally known. When the rotary electric machine is driven by pulse width modulation (PWM) control, a harmonic current flows through the rotary electric machine, and the harmonic current causes an increase in loss and vibration of the rotary electric machine.

In addition, there is a control technique for shifting a phase of a harmonic current component generated in each group when a plurality of groups of power conversion devices is used. For example, Patent Literature 1 describes a drive system that applies AC voltages having equal magnitudes and phases inverted to two sets of three-phase winding rotary electric machines having phases different from each other by an electrical angle of 180 degrees.

### CITATION LIST

### PATENT LITERATURE

Patent Literature 1: WO 2014/132385 A1

### SUMMARY OF INVENTION

### TECHNICAL PROBLEM

In the conventional technique described in Patent Literature 1, it is possible to increase the inductance and lower the current ripple by applying an AC voltage whose phase is inverted to the rotary electric machines of two sets of three-phase windings. However, Patent Literature 1 does not describe control for reducing the loss of the rotary electric machine, and has a problem that the loss of each portion of the rotary electric machine increases and the temperature rises.

The present disclosure has been made to solve the above problems, and an object thereof is to provide a rotary electric machine driving device capable of reducing a loss generated in each portion of a rotary electric machine and suppressing a temperature rise at a portion exceeding a threshold temperature.

### SOLUTION TO PROBLEM

A rotary electric machine driving device according to the present disclosure is a rotary electric machine driving device that drives a rotary electric machine including a stator including a plurality of groups of stator windings of three or more phases, and a rotor as a rotating body, the rotary electric machine driving device including: a plurality of groups of power converters provided corresponding to the respective groups, to convert DC power input from a power supply into a phase current, and output the phase current to the stator windings of the respective groups; and a control unit to output a control signal generated on the basis of a carrier wave to control the power converters of the respective groups, and switch a phase of the carrier wave in each of the groups when a temperature of a part of the rotary electric machine is higher than a threshold temperature.

### ADVANTAGEOUS EFFECTS OF INVENTION

According to the present disclosure, when the temperature of a part of a rotary electric machine is higher than a threshold temperature, by switching a phase of a carrier wave in each group, it is possible to reduce a loss generated in each part of the rotary electric machine and suppress a temperature rise at a portion exceeding the threshold temperature.

### BRIEF DESCRIPTION OF DRAWINGS

FIG. 1 is a circuit diagram illustrating a configuration example of a rotary electric machine driving device according to a first embodiment.
FIG. 2 is a block diagram illustrating a configuration example of a control unit according to the first embodiment.
FIG. 3 is a cross-sectional view illustrating a cross section of a permanent magnet synchronous rotary electric machine.
FIG. 4 is a cross-sectional view illustrating a cross section of an induction rotary electric machine.
FIG. 5 is a cross-sectional view illustrating winding configurations of group-1 and group-2 in a rotary electric machine in which the number of slots per pole per phase is two (hereinafter referred to as per pole per phase (2)).
FIG. 6 is a cross-sectional view illustrating winding configurations of group-1 and group-2 in a rotary electric machine in which the number of slots per pole per phase is four (hereinafter referred to as per pole per phase (4)).
FIG. 7 is a graph illustrating amplitudes of phase currents of the group-1 and the group-2 with respect to a phase.
FIG. 8 is a waveform diagram illustrating a carrier wave of the group-1 and a carrier wave of the group-2.
FIG. 9 is a waveform diagram illustrating a phase difference between the carrier wave of the group-1 and the carrier wave of the group-2 in an emphasized manner by enlarging a phase range.
FIG. 10 is a graph illustrating a rotor loss with respect to a carrier wave phase difference between the group-1 and the group-2.
FIG. 11 is a graph illustrating a stator loss with respect to a carrier wave phase difference between the group-1 and the group-2.
FIG. 12 is a flowchart illustrating a rotary electric machine driving method according to the first embodiment.
FIG. 13 is a waveform diagram illustrating a triangular wave carrier wave and a phase voltage signal wave.
FIG. 14 is a graph illustrating a harmonic voltage amplitude with respect to a DC voltage in a carrier primary component with respect to a modulation rate.
FIG. 15 is a graph illustrating a harmonic voltage amplitude with respect to the DC voltage in a carrier secondary component with respect to the modulation rate.
FIG. 16 is a graph illustrating carrier harmonic components appearing in the group-1 and the group-2 with respect to a frequency and a rotation speed.
FIGS. 17A and 17B are block diagrams illustrating a hardware configuration that implements a function of a control unit included in the rotary electric machine driving device according to the first embodiment.

### DESCRIPTION OF EMBODIMENTS

### First Embodiment

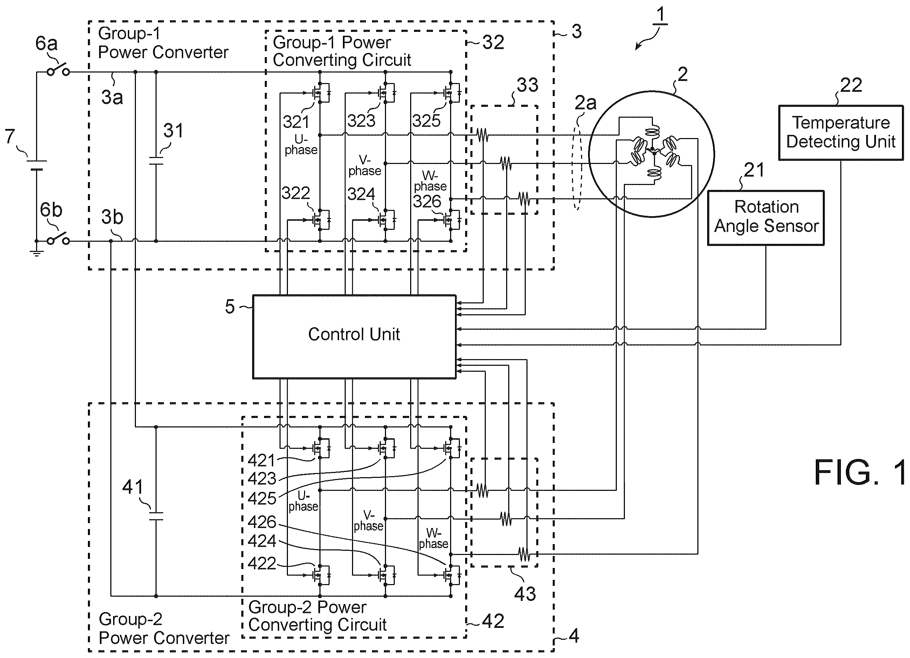

FIG. 1 is a circuit diagram illustrating a configuration example of a rotary electric machine driving device 1 according to a first embodiment. In FIG. 1, a rotary electric machine driving device 1 is a device that drives a rotary electric machine 2, and includes a group-1 power converter 3, a group-2 power converter 4, and a control unit 5. A DC busbar 3a is opened and closed by a power switch 6a, and a DC busbar 3b is opened and closed by a power switch 6b. The group-1 power converter 3 and the group-2 power converter 4 are connected to a DC power supply 7 via the DC busbar 3a and the DC busbar 3b, and receive drive power as input from the DC power supply 7, and output regenerative power to the DC power supply 7. The group-1 power converter 3 and the group-2 power converter 4 are connected to the rotary electric machine 2 via an AC busbar 2a, and output drive power to the rotary electric machine 2 and receive regenerative power as input from the rotary electric machine 2.

The rotary electric machine 2 is a rotary electric machine including a stator including a plurality of groups of stator windings of three or more phases, and a rotor as a rotating body. The rotary electric machine 2 includes a rotation angle sensor 21 that detects the rotation angle of the rotor, and a temperature detecting unit 22 that detects the temperature of the stator and the temperature of the rotor. For example, the rotary electric machine 2 is a multiple rotary electric machine including three-phase stator windings driven by two systems of group-1 and group-2.

The group-1 power converter 3 is a group-1 power converter including a group-1 capacitor 31, a group-1 power converting circuit 32, and a rotary electric machine current detecting unit 33. Group-1 means a first group. The group-1 capacitor 31 is a smoothing capacitor connected between the DC busbar 3a and the DC busbar 3b on a power input side of the group-1 power converting circuit 32. The group-1 power converting circuit 32 is a circuit that includes switching elements 321 to 326 and performs DC and AC power conversion by switching operation of the switching elements 321 to 326. The rotary electric machine current detecting unit 33 detects the current of the rotary electric machine 2 flowing through the AC busbar 2a.

The group-1 power converting circuit 32 is an inverter circuit in which the switching element 321, the switching element 322, the switching element 323, the switching element 324, the switching element 325, and the switching element 326 are full-bridge connected. In the group-1 power converting circuit 32, the switching element 321 and the switching element 322 are connected in series, the switching element 323 and the switching element 324 are connected in series, and the switching element 325 and the switching element 326 are connected in series. The switching element 321 and the switching element 322 connected in series, the switching element 323 and the switching element 324 connected in series, and the switching element 325 and the switching element 326 connected in series are connected in parallel to the DC power supply 7.

An input terminal of U-phase of the group-1 in the rotary electric machine 2 is connected to a connection point between the switching elements 321 and 322 connected in series. An input terminal of V-phase of the group-1 in the rotary electric machine 2 is connected to a connection point between the switching elements 323 and 324 connected in series. An input terminal of W-phase of the group-1 in the rotary electric machine 2 is connected to a connection point between the switching elements 325 and 326 connected in series. Here, the switching elements 321, 323, and 325 connected to the DC busbar 3a are referred to as upper-stage switching elements, and the switching elements 322, 324, and 326 connected to the DC busbar 3b are referred to as lower-stage switching elements.

As the switching elements 321 to 326, for example, a metal oxide semiconductor field effect transistor (MOSFET) as illustrated in FIG. 1 is used. In addition to the MOSFET, an insulated gate bipolar transistor (IGBT) or the like may be used.

In each MOSFET as the switching elements 321 to 326, freewheel diodes (FWD) are provided in parallel with a direction from a negative electrode side to a positive electrode side of the DC power supply 7, that is, a direction from a lower stage side to an upper stage side as a forward direction.

The group-2 power converter 4 is a group-2 power converter including a group-2 capacitor 41, a group-2 power converting circuit 42, and a rotary electric machine current detecting unit 43. Group-2 means a second group. The group-2 capacitor 41 is a smoothing capacitor connected between the DC busbar 3a and the DC busbar 3b on a power input side of the group-2 power converting circuit 42. The group-2 power converting circuit 42 is a circuit that includes switching elements 421 to 426 and performs DC and AC power conversion by switching operation of the switching elements 421 to 426. The rotary electric machine current detecting unit 43 detects the current of the rotary electric machine 2 flowing through the AC busbar 2a.

The group-2 power converting circuit 42 is an inverter circuit in which the switching element 421, the switching element 422, the switching element 423, the switching element 424, the switching element 425, and the switching element 426 are full-bridge connected. In the group-2 power converting circuit 42, the switching element 421 and the switching element 422 are connected in series, the switching element 423 and the switching element 424 are connected in series, and the switching element 425 and the switching element 426 are connected in series. The switching element 421 and the switching element 422 connected in series, the switching element 423 and the switching element 424 connected in series, and the switching element 425 and the switching element 426 connected in series are connected in parallel to the DC power supply 7.

An input terminal of U-phase of the group-2 in the rotary electric machine 2 is connected to a connection point between the switching elements 421 and 422 connected in series. An input terminal of V-phase of the group-2 in the rotary electric machine 2 is connected to a connection point between the switching elements 423 and 424 connected in series. An input terminal of W-phase of the group-2 in the rotary electric machine 2 is connected to a connection point between the switching elements 425 and 426 connected in series. Here, the switching elements 421, 423, and 425 connected to the DC busbar 3a are referred to as upper-stage switching elements, and the switching elements 422, 424, and 426 connected to the DC busbar 3b are referred to as lower-stage switching elements.

As the switching elements 421 to 426, for example, MOSFETs as illustrated in FIG. 1 are used. In addition to the MOSFET, an IGBT or the like may be used.

In each MOSFET as the switching elements 421 to 426, freewheel diodes (FWD) are provided in parallel with the direction from the negative electrode side to the positive electrode side of the DC power supply 7, that is, the direction from the lower stage side to the upper stage side as a forward direction.

As the switching elements, the same type of semiconductor switching elements may be used for the group-1 power converter 3 and the group-2 power converter 4, but different elements may be used.

For example, when the same type of semiconductor switching elements are used, the switching elements of the group-1 power converter 3 and the group-2 power converter 4 may be MOSFETs or IGBTs. Further, when different types of semiconductor switching elements are used, the switching element of the group-1 power converter 3 may be a MOSFET, and the switching element of the group-2 power converter 4 may be an IGBT.

Note that the switching operation of the switching elements of the group-1 power converter 3 and the group-2 power converter 4 is controlled by the control unit 5.

The rotary electric machine current detecting unit 33 detects a current flowing through the AC busbar 2a, and outputs rotary electric machine current information obtained by converting the current into a voltage to the control unit 5. In the example of FIG. 1, the current is detected by a shunt resistor which is the rotary electric machine current detecting unit 33. Note that the rotary electric machine current detecting unit 33 may be implemented by a current sensor using a magnetic sensor such as a Hall element.

The power switch 6a controls exchange of power between the DC power supply 7 and the group-1 power converter 3, and the power switch 6b controls exchange of power between the DC power supply 7 and the group-2 power converter 4. The power switches 6a and 6b are suppressed to an open state by the host system when the voltage of the DC power supply 7 becomes equal to or higher than a set value during the regenerative operation of the rotary electric machine 2, when the voltage of the DC power supply 7 becomes equal to or lower than the set value due to exhaustion of the DC power supply 7, or the like, or when the current flowing through the DC power supply 7 becomes equal to or higher than the set value.

Note that the power switches 6a and 6b may be configured to be controlled by the control unit 5.

The rotation angle sensor 21 detects the rotation angle of the rotor included in the rotary electric machine 2 by a resolver, an encoder, a magnetic sensor, or the like. Information indicating the rotation angle of the rotor detected by the rotation angle sensor 21 is output to the control unit 5.

The temperature detecting unit 22 detects the temperature of the stator and the temperature of the rotor included in the rotary electric machine 2. Information indicating the temperature of each part of the rotary electric machine 2 detected by the temperature detecting unit 22 is output to the control unit 5. In addition, the temperature detecting unit 22 that detects the temperature by a different method depending on each part of the rotary electric machine 2 may be used. For example, the temperature detecting unit 22 may be a thermistor or a thermocouple.

The rotary electric machine driving device 1 illustrated in FIG. 1 includes the group-1 power converter 3 and the group-2 power converter 4, but is not limited thereto. That is, the rotary electric machine driving device 1 may be not only two systems of the group-1 and the group-2 but also three or more groups of systems. For example, the rotary electric machine driving device 1 includes three or more groups of smoothing capacitors, power converting circuits, rotary electric machine current detecting units, and switching elements of the power converting circuits.

The control unit 5 outputs a control signal generated on the basis of the carrier wave to control the group-1 power converter 3 and the group-2 power converter 4, and switches the phase of the carrier wave in each group when the temperature of a part of the rotary electric machine 2 is higher than the threshold temperature.

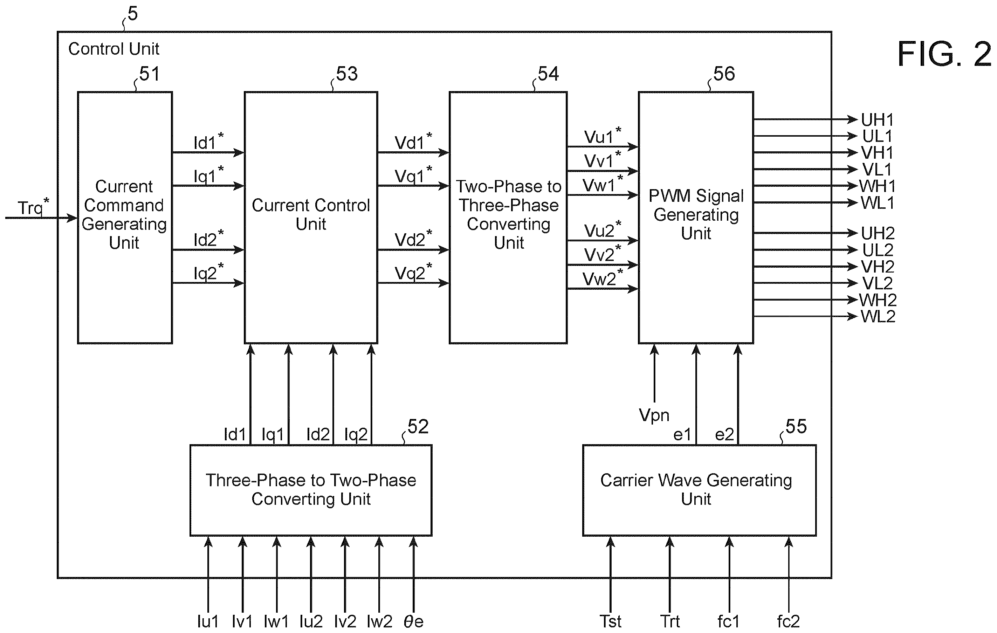

FIG. 2 is a block diagram illustrating a configuration example of the control unit 5. In FIG. 2, the control unit 5 includes a current command generating unit 51, a three-phase to two-phase converting unit 52, a current control unit 53, a two-phase to three-phase converting unit 54, a carrier wave generating unit 55, and a PWM signal generating unit 56.

The current command generating unit 51 generates a group-1 d-axis current command value Id1* and a group-1 q-axis current command value Iq1*, and a group-2 d-axis current command value Id2* and a group-2 q-axis current command value Iq2* on the basis of a torque command Trq*. Here, a d-axis indicates a direction in which a magnetic flux of a permanent magnet which is a rotor included in the rotary electric machine 2 is generated, and a q-axis is an axis electrically orthogonal to the d-axis. The torque command Trq* is control information that specifies the torque of the rotor included in the rotary electric machine 2, and is generated, for example, in a host system that controls the rotary electric machine driving device 1, and is acquired by the current command generating unit 51 from the host system. The group-1 d-axis current command value Id1* is a current command value in a d-axis direction of the group-1, and the group-1 q-axis current command value Iq1* is a current command value in a q-axis direction of the group-1. The group-2 d-axis current command value Id2* is a current command value in a d-axis direction of the group-2, and the group-2 q-axis current command value Iq2* is a current command value in a q-axis direction of the group-2.

Note that the current command generating unit 51 may include a plurality of current command maps for a torque command created using a result of previous actual measurement or a result of simulation. In this case, the current command generating unit 51 may generate the group-1 d-axis current command value Id1* and the group-1 q-axis current command value Iq1* and the group-2 d-axis current command value Id2* and the group-2 q-axis current command value Iq2* as a result of searching the map on the basis of the torque command Trq*.

The three-phase to two-phase converting unit 52 receives a group-1 U-phase current Iu1, a group-1 V-phase current Iv1, and a group-1 W-phase current Iw1 from the rotary electric machine current detecting unit 33, receives a group-2 U-phase current Iu2, a group-2 V-phase current Iv2, and a group-2 W-phase current Iw2 from the rotary electric machine current detecting unit 43, and receives an electrical angle θe from the rotation angle sensor 21. The group-1 U-phase current Iu1 is a current value flowing through a stator winding of U-phase of the group-1, the group-1 V-phase current Iv1 is a current value flowing through a stator winding of V-phase of the group-1, and the group-1 W-phase current Iw1 is a current value flowing through a stator winding of W-phase of the group-1. The group-2 U-phase current Iu2 is a current value flowing through a stator winding of U-phase of the group-2, the group-2 V-phase current Iv2 is a current value flowing through a stator winding of V-phase of the group-2, and the group-2 W-phase current Iw2 is a current value flowing through a stator winding of W-phase of the group-2. The electrical angle θe is a rotation angle of a rotor included in the rotary electric machine 2.

The three-phase to two-phase converting unit 52 performs three-phase to two-phase coordinate conversion on the basis of the group-1 U-phase current Iu1, the group-1 V-phase current Iv1, and the group-1 W-phase current Iw1, the group-2 U-phase current Iu2, the group-2 V-phase current Iv2, and the group-2 W-phase current Iw2, and the electrical angle θe, thereby converting the group-1 U-phase current Iu1, the group-1 V-phase current Iv1, and the group-1 W-phase current Iw1 into a group-1 d-axis current detection value Id1 and a group-1 q-axis current detection value Iq1, and converting the group-2 U-phase current Iu2, the group-2 V-phase current Iv2, and the group-2 W-phase current Iw2 into a group-2 d-axis current detection value Id2 and a group-2 q-axis current detection value Iq2. The group-1 d-axis current detection value Id1 is a current detection value in the d-axis direction of the group-1, and the group-1 q-axis current detection value Iq1 is a current detection value in the q-axis direction of the group-1. The group-2 d-axis current detection value Id2 is a current detection value in the d-axis direction of the group-2, and the group-2 q-axis current detection value Iq2 is a current detection value in the q-axis direction of the group-2.

The group-1 d-axis current command value Id1* and the group-1 q-axis current command value Iq1*, and the group-2 d-axis current command value Id2* and the group-2 q-axis current command value Iq2* are input from the current command generating unit 51 to the current control unit 53. Furthermore, from the three-phase to two-phase converting unit 52, the group-1 d-axis current detection value Id1, the group-1 q-axis current detection value Iq1, the group-2 d-axis current detection value Id2, and the group-2 q-axis current detection value Iq2 are input to the current control unit 53.

The current control unit 53 calculates a group-1 d-axis current deviation between the group-1 d-axis current command value Id1* and the group-1 d-axis current detection value Id1, calculates a group-1 q-axis current deviation between the group-1 q-axis current command value Iq1* and the group-1 q-axis current detection value Iq1, calculates a group-2 d-axis current deviation between the group-2 d-axis current command value Id2* and the group-2 d-axis current detection value Id2, and calculates a group-2 q-axis current deviation between the group-2 q-axis current command value Iq2* and the group-2 q-axis current detection value Iq2. The current control unit 53 calculates a group-1 d-axis voltage command value Vd1* and a group-1 q-axis voltage command value Vq1* and a group-2 d-axis voltage command value Vd2* and a group-2 q-axis voltage command value Vq2* by performing proportional and integral control calculations on the current deviations of the respective groups.

The two-phase to three-phase converting unit 54 calculates group-1 three-phase voltage command values Vu1*, Vv1*, and Vw1* in the stationary coordinate system on the basis of the group-1 d-axis voltage command value Vd1* and the group-1 q-axis voltage command value Vq1*, and calculates group-2 three-phase voltage command values Vu2*, Vv2*, and Vw2* in the stationary coordinate system on the basis of the group-2 d-axis voltage command value Vd2* and the group-2 q-axis voltage command value Vq2*. The three-phase voltage command value of each group calculated by the two-phase to three-phase converting unit 54 is output to the PWM signal generating unit 56. The group-1 U-phase voltage command value Vu1* is a group-1 U-phase voltage command value, the group-1 V-phase voltage command value Vv1* is a group-1 V-phase voltage command value, and the group-1 W-phase voltage command value Vw1* is a group-1 W-phase voltage command value. The group-2 U-phase voltage command value Vu2* is a group-2 U-phase voltage command value, the group-2 V-phase voltage command value Vv2* is a group-2 V-phase voltage command value, and the group-2 W-phase voltage command value Vw2* is a group-2 W-phase voltage command value.

The carrier wave generating unit 55 receives a stator temperature Tst, a rotor temperature Trt, a group-1 carrier frequency fc1, and a group-2 carrier frequency fc2, and generates a group-1 triangular wave carrier wave e1 and a group-2 triangular wave carrier wave e2 on the basis of relationships between the stator temperature Tst and the rotor temperature Trt and respective threshold temperatures. The temperature of the stator is the temperature of the winding of the stator. The temperature of the winding wire of the stator can be calculated using a thermistor which is the temperature detecting unit 22.

In addition, a thermocouple may be used in addition to the thermistor in calculating the temperature of the winding of the stator by the temperature detecting unit 22, and the temperature can be calculated on the basis of the thermal circuit and the loss of the rotary electric machine 2.

In a case where the rotary electric machine 2 is a permanent magnet rotary electric machine, the temperature of the rotor is the temperature of the permanent magnet, and when the rotary electric machine 2 is an induction rotary electric machine, it is the temperature of a rotor bar or an end ring.

The temperature of the permanent magnet can be calculated using an induced voltage obtained from the rotary electric machine 2. When the temperature of the permanent magnet changes, the magnetic force of the permanent magnet changes, so that the induced voltage of the rotary electric machine 2 also changes. Therefore, by recognizing the correspondence relationship between the temperature of the permanent magnet and the induced voltage in advance, the temperature of the permanent magnet can be calculated using the induced voltage of the rotary electric machine 2.

In calculating the temperature of the permanent magnet, the rotor bar, or the end ring, a thermocouple only needs to be used as the temperature detecting unit 22, and a slip ring only needs to be used when the thermocouple is attached to the rotor. When the slip ring is not used, the temperature of the rotor can be calculated by emitting and acquiring a signal from the thermocouple as a radio wave signal. In addition, the temperature of the rotor can be calculated from the thermal circuit and the loss of the rotary electric machine 2.

The carrier frequency is a frequency in one cycle of an electrical angle of a triangular wave carrier wave.

For example, the group-1 carrier frequency is a frequency in one electrical angle cycle of the group-1 triangular wave carrier wave e1, and the group-2 carrier frequency is a frequency in one electrical angle cycle of the group-2 triangular wave carrier wave e2. The carrier wave generating unit 55 calculates a phase difference between the group-1 triangular wave carrier wave e1 and the group-2 triangular wave carrier wave e2 on the basis of a magnitude relationship between the stator temperature Tst and a predetermined stator temperature threshold and a magnitude relationship between the rotor temperature Trt and a rotor temperature threshold. Then, the carrier wave generating unit 55 outputs the group-1 triangular wave carrier wave e1 and the group-2 triangular wave carrier wave e2 on the basis of the calculated phase difference between the group-1 triangular wave carrier wave e1 and the group-2 triangular wave carrier wave e2, and on the basis of the group-1 carrier frequency fc1 and the group-2 carrier frequency fc2.

Note that the carrier wave generating unit 55 may have a triangular wave carrier wave phase difference map in which the phase difference of the triangular wave carrier wave is registered in association with the stator temperature and the rotor temperature. In this case, the carrier wave generating unit 55 searches the triangular wave carrier wave phase difference map using the stator temperature and the rotor temperature to specify the triangular wave carrier wave of each group.

The PWM signal generating unit 56 calculates ON/OFF control signals to the each switching elements included in the group-1 power converting circuit 32 and the group-2 power converting circuit 42 on the basis of the group-1 three-phase voltage command values Vu1*, Vv1*, and Vw1* and the group-2 three-phase voltage command values Vu2*, Vv2*, and Vw2* generated by the two-phase to three-phase converting unit 54, the group-1 triangular wave carrier wave e1 and the group-2 triangular wave carrier wave e2 generated by the carrier wave generating unit 55, and a DC busbar voltage Vpn.

The PWM signal generating unit 56 compares the three-phase voltage command value with the triangular wave carrier wave by a comparator, determines on/off of the switching element on the basis of the comparison result, and generates an on/off control signal for switching operation in the determined on/off state. Examples of on/off control signals include UH1, UL1, VH1, VL1, WH1, and WL1 that are group-1 on/off control signals output to the group-1 power converting circuit 32, and group-2 on/off control signals UH2, UL2, VH2, VL2, WH2, and WL2 that are output to the group-2 power converting circuit 42.

The control unit 5 turns on and off switching elements 321 to 326 by the on/off control signals UH1, UL1, VH1, VL1, WH1, and WL1 to the group-1 power converting circuit 32, and turns on and off the switching elements 421 to 426 by the on/off control signals UH2, UL2, VH2, VL2, WH2, and WL2 to group-2 power converting circuit 42.

The control unit 5 converts DC power input from the DC power supply 7 into AC power by controlling the switching operation of each switching element included in the power converting circuit of each group, and supplies the converted AC power to the rotary electric machine **2.** Furthermore, the control unit 5 charges the DC power supply 7 with the regenerative power generated from the rotary electric machine 2 in a regenerative state by controlling the switching operation of each switching element included in the power converting circuit of each group.

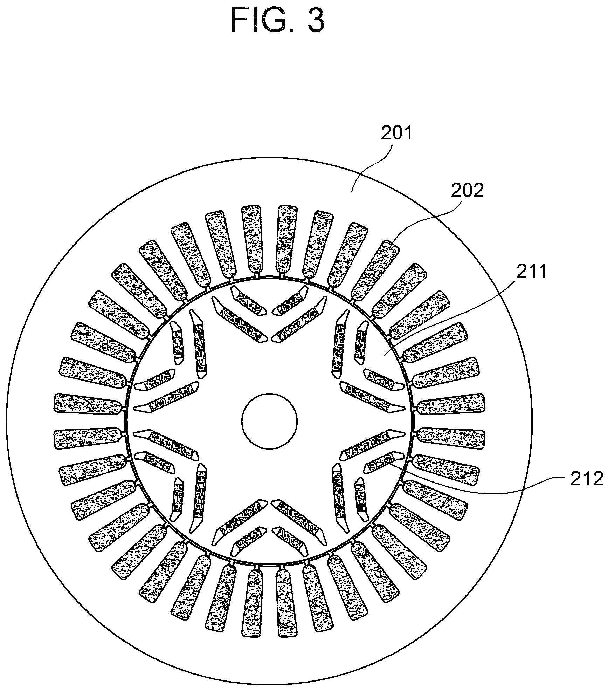

FIG. 3 is a cross-sectional view illustrating a cross section of a permanent magnet synchronous rotary electric machine, and illustrates a cross section of the permanent magnet synchronous rotary electric machine taken along a plane orthogonal to the axial direction. In the rotary electric machine driving device 1, the rotary electric machine 2 may be a permanent magnet synchronous rotary electric machine. As illustrated in FIG. 3, the permanent magnet synchronous rotary electric machine includes a winding 202 in a stator 201 and a permanent magnet 212 in a rotor 211. In FIG. 3, the permanent magnet synchronous rotary electric machine has six poles and 36 slots and is a distributed winding of per pole per phase (2).

Note that, in per pole per phase (2), the number of slots in per pole per phase is two. The winding of the stator 201 includes a plurality of groups of windings. Another group of windings may be configured in the same slot. The permanent magnet 212 of the rotor 211 is configured to be arranged in a V-shape over two layers. By arranging the permanent magnets in two layers, the permanent magnet 212 on the inner diameter side of the rotor 211 is farther from the stator winding. Thus, it is possible to reduce the influence of harmonic magnetic flux caused by the carrier of the stator winding. In addition, eddy current with respect to the harmonic magnetic flux is reduced, and the loss of the eddy current can be reduced.

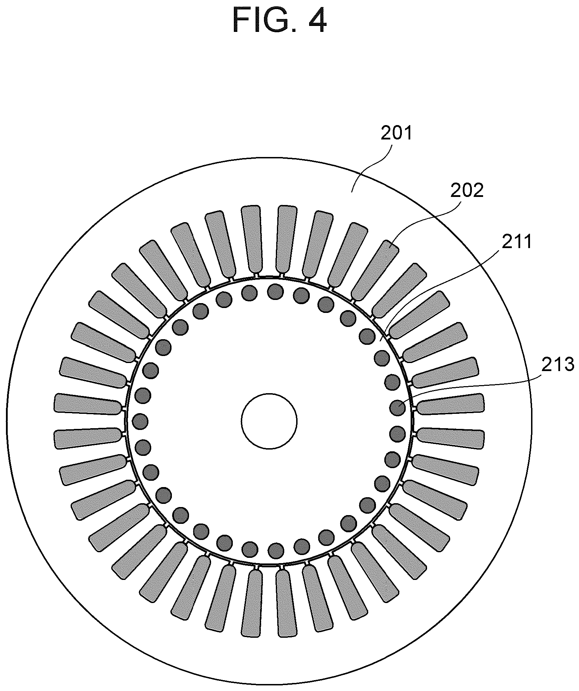

FIG. 4 is a cross-sectional view illustrating a cross section of the induction rotary electric machine, illustrating a cross section of the induction rotary electric machine taken along a plane orthogonal to the axial direction. In the rotary electric machine driving device 1, the rotary electric machine 2 may be an induction rotary electric machine. As illustrated in FIG. 4, the induction rotary electric machine includes a winding 202 in a stator 201 and a rotor bar 213 in a rotor 211. The rotor bars 213 are short-circuited by end rings at both ends in the axial direction. In the induction rotary electric machine, the rotating magnetic field generated by the stator winding interlinks with the rotor 211, whereby an induction current flows through the rotor bar 213, and torque is generated to rotate. In addition to the circular shape, the rotor bar 213 may have an elliptical shape or a double basket shape having two rotor bar slots in a radial direction. In the double basket shape, the rotor bar 213 on the inner diameter side of the rotor 211 is farther from the stator winding, and thus the influence of the harmonic magnetic flux caused by the carrier of the stator winding can be reduced.

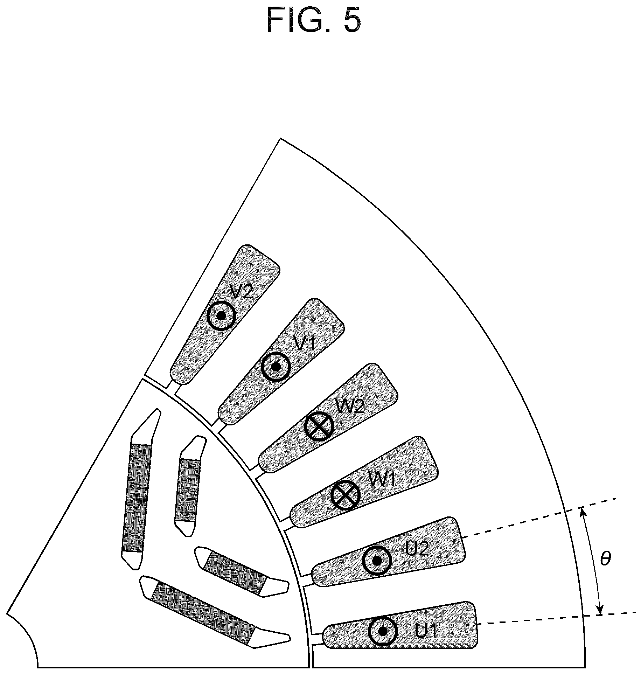

FIG. 5 is a cross-sectional view illustrating the winding configurations of the group-1 and the group-2 in per pole per phase (2). An interval between slots of the stator winding in per pole per phase (2) is an electrical angle θ = 180/(3 × 2) = 30 degrees. The windings of the group-1 are U1, V1 and W1, and the windings of the group-2 are U2, V2 and W2. As illustrated in FIG. 5, the windings of the group-1 and the windings of the group-2 are wound while being shifted from each other by an electrical angle θ = 30 degrees. By arranging a plurality of groups of windings in one pole, it is possible to cancel out harmonics between the groups, and it is possible to obtain an effect of reducing loss and vibration. In addition, by configuring a plurality of groups, it is possible to obtain an effect of having redundancy even when any system fails.

Further, FIG. 5 illustrates a cross section per pole, and in each group, the U-phase winding has a positive upward energization direction, the V-phase winding has a positive upward energization direction, and the W-phase winding has a positive downward energization direction.

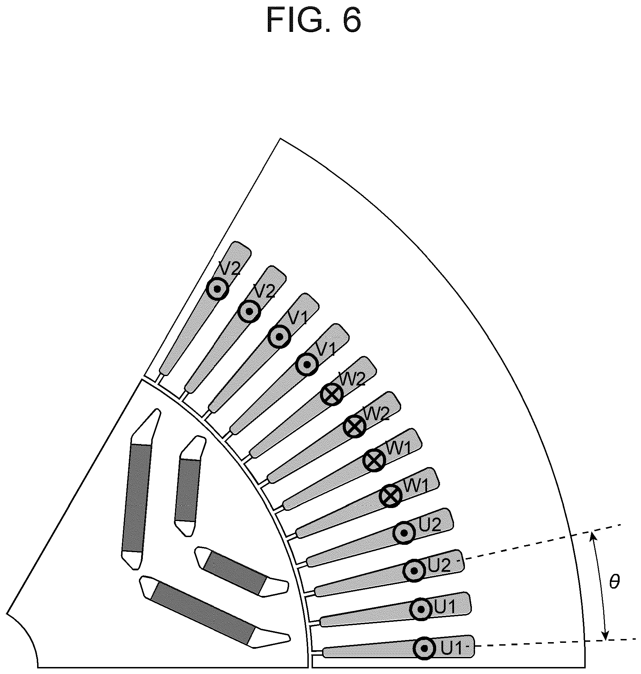

FIG. 6 is a cross-sectional view illustrating the winding configurations of the group-1 and the group-2 in per pole per phase (4). An interval between slots of the stator winding in per pole per phase (4) is an electrical angle θ= 180/(3 × 4) = 15 degrees. The windings of the group-1 are U1, V1 and W1, and the windings of the group-2 are U2, V2 and W2. As illustrated in FIG. 6, the windings of the group-1 and the windings of the group-2 are wound while being shifted from each other by an electrical angle θ = 30 degrees corresponding to two slots.

Note that, in per pole per phase (4), the number of slots in per pole per phase is four. In the case of four systems including up to four groups in per pole per phase (4), the windings of each group are wound with a shift by an electrical angle θ = 15 degrees corresponding to one slot. In the rotary electric machine driving device 1, as the number of systems increases, it is possible to finely shift the phase difference of the carrier waves between the groups to finely reduce the harmonic magnetic flux, and it is possible to obtain the effects of reduction in loss and reduction in vibration.

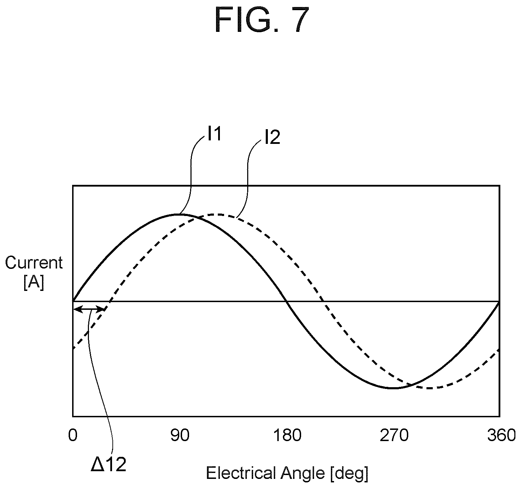

FIG. 7 is a graph illustrating amplitudes of phase currents of the group-1 and the group-2 with respect to the phase. In FIG. 7, I1 indicates a relationship of a phase current of group-1 with respect to the electrical angle, and I2 indicates a relationship of a phase current of group-2 with respect to the electrical angle. The control unit 5 performs control in such a manner that the amplitudes of the phase currents of the groups output from the power converting circuits of the groups are equal to each other. Furthermore, a current phase difference Δ12 between the group-1 phase current and the group-2 phase current is controlled in such a manner as to have an electrical angle of 30 degrees. The control unit 5 can cancel out the harmonic components of the group-1 and the group-2 by controlling the phase difference of energizing currents in such a manner as to be equal to a spatial phase difference which is the winding interval of the group-1 and the group-2.

With respect to the rotary electric machine 2 in which the windings of the group-1 and the group-2 are wound at an interval of 30 degrees in electrical angle, the control unit 5 performs control in such a manner that the current amplitudes of the group-1 and the group-2 are equal, and performs control in such a manner that the current phase difference between the group-1 and the group-2 becomes 30 degrees in electrical angle. Thus, the rotary electric machine driving device 1 can remove torque ripple of 6f, which is a component six times the fundamental frequency f, and the electromagnetic excitation force, and can reduce vibration.

In addition, the electrical angle of 30 degrees is 180 degrees in the 6f component, and thus the phase is inverted between the 6f component torque ripple generated in the system of the group-1 and the 6f component torque ripple generated in the system of the group-2. Therefore, the torque ripple of the 6f component can be removed. In addition, the magnetic flux is also canceled in the same manner, and thus the eddy current caused by the harmonic magnetic flux is reduced, and the loss can be reduced.

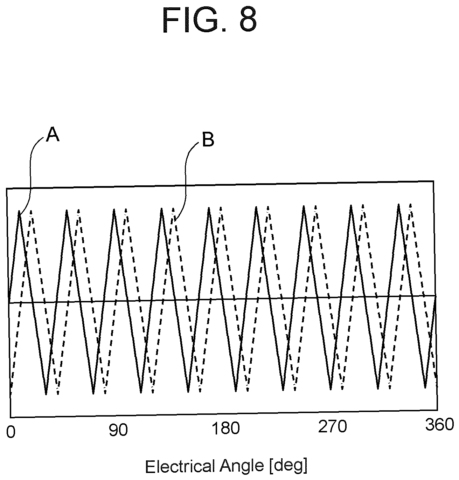

FIG. 8 is a waveform diagram illustrating a carrier wave of the group-1 and a carrier wave of the group-2. In FIG. 8, a triangular wave A is a triangular wave carrier wave of the group-1, and a triangular wave B is a triangular wave carrier wave of the group-2. The control unit 5 generates a triangular wave on the basis of the carrier frequency of each group. For example, in the case of performing synchronous control in which the carrier frequency is an integer multiple of the fundamental frequency f, the control unit 5 generates a group-1 triangular wave carrier wave that is a triangular wave A, and generates a group-2 triangular wave carrier wave that is a triangular wave B. For example, in one electrical angle cycle, the triangular waves A and B are nine cycles of synchronous nine pulses.

Further, the control unit 5 may perform asynchronous control in which the carrier frequency is not an integer multiple of the fundamental frequency f. Even in the case of asynchronous control, the control unit 5 performs control to switch a carrier wave phase difference ΔAB of each group on the basis of the temperature of the stator and the temperature of the rotor.

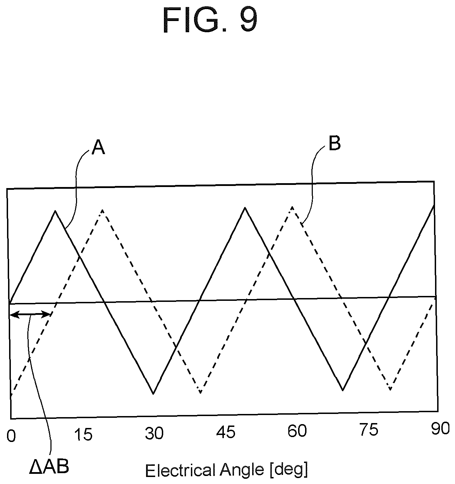

FIG. 9 is a waveform diagram illustrating a phase difference between the group-1 of carrier waves and the group-2 of carrier waves in an emphasized manner by enlarging the phase range, and illustrates the waveform of FIG. 8 in an enlarged manner. In FIG. 9, the triangular wave A is a triangular wave carrier wave of the group-1, and the triangular wave B is a triangular wave carrier wave of the group-2. The control unit 5 may perform either synchronous control or asynchronous control in order to control the carrier wave phase difference ΔAB between the group-1 and the group-2. The carrier wave phase difference ΔAB between the group-1 and the group-2 in FIG. 9 indicates a phase in terms of one cycle of the rotary electric machine **2.** In addition, since nine synchronous pulses are used, the electrical angle 8 = 360/9 = 40 degrees is one cycle of the carrier wave. The phase difference ΔAB of each group of carrier waves is controlled as an angle of one-period conversion of the carrier waves.

In a case where the control unit 5 performs control in such a manner that the carrier wave phase difference ΔAB between the group-1 and the group-2 becomes 360 degrees, the electrical angle θ is shifted by 40 degrees in one cycle of the rotary electric machine 2.

The rectangular wave voltage calculated on the basis of the comparison result between the three-phase voltage command value and the triangular wave carrier wave includes harmonics other than the fundamental wave.

The harmonic component caused by the carrier appears as a sideband wave of an integer multiple of the carrier frequency fc.

With respect to the fundamental frequency f, typical frequency components of harmonics included in the rectangular wave voltage waveform are fc ± 2f and 2fc ± f.

The harmonic components caused by these carriers appear for each group, and thus the control unit 5 changes the carrier wave phase difference of each group to cancel out the magnetic flux of the harmonic caused by the carrier.

When the spatial phase difference between the windings of the group-1 and the group-2 is 30 degrees and the time phase difference between the energizing currents of the group-1 and the group-2 is 30 degrees, in the sideband wave caused by the carrier primary component, there is a phase difference of 30 + 2 × 30 = 90 degrees due to the spatial phase difference and the time phase difference. In the sideband wave caused by the carrier primary component, the second harmonic of the fundamental wave is added or subtracted, and the second harmonic of the fundamental wave is in opposite phase with the fundamental wave. Therefore, the expression obtained by adding the spatial phases is obtained.

Since there is a phase difference of 90 degrees between the spatial phase difference and the time phase difference, when the carrier wave phase difference between the group-1 and the group-2 is set to (90 + 180 × n) degrees, the harmonic magnetic fluxes caused by the carrier primary component of the group-1 and the group-2 can be canceled out. Here, n represents an integer.

On the other hand, when the spatial phase difference between the windings of the group-1 and the group-2 is 30 degrees and the time phase difference between the energizing currents of the group-1 and the group-2 is 30 degrees, the phase difference of 30 - 30 = 0 degrees is obtained by the spatial phase difference and the time phase difference in the sideband wave caused by the carrier secondary component.

In the sideband wave caused by the carrier secondary component, the fundamental wave is added or subtracted, and the fundamental wave becomes in phase. Therefore, a subtracted expression is obtained for the spatial phase. Since the phase difference between the spatial phase difference and the time phase difference is 0 degrees, when the carrier wave phase difference between the group-1 and the group-2 is set to (180 × n) degrees, the harmonic magnetic fluxes caused by the carrier secondary component of the group-1 and the group-2 can be canceled out.

The rotor is located at a position separated from the stator by a void gap, and thus the influence of a component having a high frequency is reduced. Therefore, when the harmonic magnetic flux caused by the carrier secondary component attenuates, the harmonic magnetic flux caused by the carrier primary component becomes dominant. On the other hand, the stator is located in the vicinity of the winding that generates the magnetic flux, and thus the harmonic magnetic flux caused by the carrier secondary component becomes dominant.

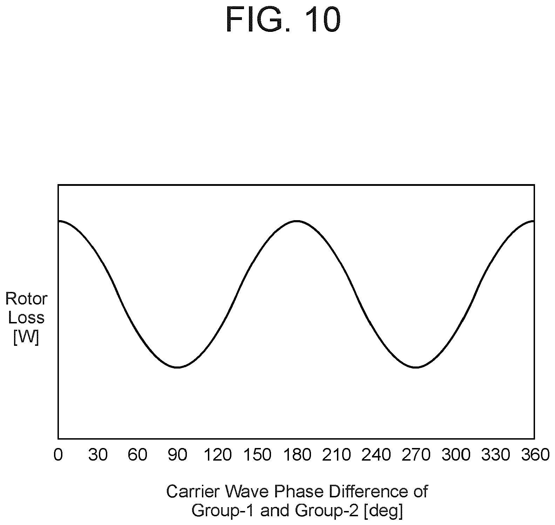

FIG. 10 is a graph illustrating a rotor loss with respect to a carrier wave phase difference between the group-1 and the group-2. As illustrated in FIG. 10, when n represents an integer and the carrier wave phase difference between the group-1 and the group-2 is (90 + 180 × n) degrees, the rotor loss is minimized. The rotor loss is a loss generated in a rotor core, a loss generated in a permanent magnet in the permanent magnet synchronous rotary electric machine, or a loss generated in a rotor bar in an induction rotary electric machine. When the carrier wave phase difference between the group-1 and the group-2 is set to (90 + 180 × n) degrees, it is possible to suppress an increase in the rotor temperature.

For example, in a case where the rotary electric machine 2 is the permanent magnet synchronous rotary electric machine, it is possible to suppress an increase in temperature of the permanent magnet, to prevent demagnetization, and to prevent a decrease in torque. In addition, even in a case where the rotary electric machine 2 is an induction rotary electric machine, it is possible to suppress the temperature rise of the rotor bar, and it is possible to prevent damage due to the temperature rise of the rotor bar and an increase in loss of the rotor bar due to an increase in resistance.

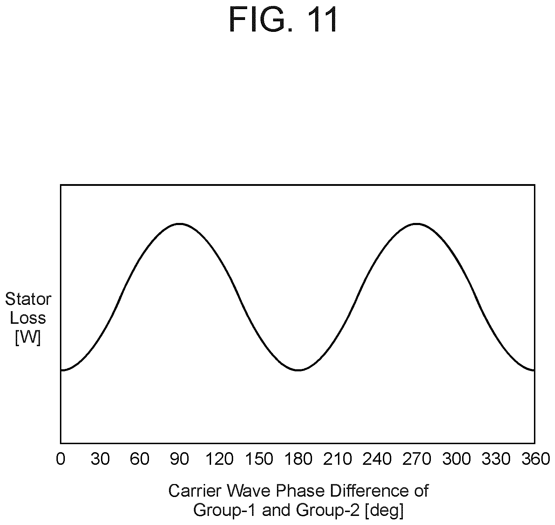

FIG. 11 is a graph illustrating a stator loss with respect to a carrier wave phase difference between the group-1 and the group-2. As illustrated in FIG. 11, the stator loss is minimized when n represents an integer and the carrier wave phase difference between the group-1 and the group-2 is (180 × n) degrees. The stator loss represents a loss generated in the stator core.

When the carrier wave phase difference between the group-1 and the group-2 is set to (180 × n) degrees, it is possible to suppress an increase in the winding temperature of the stator. By suppressing an increase in the winding temperature of the stator, it is possible to prevent the insulation film of the winding from being damaged.

Next, a rotary electric machine driving method according to the first embodiment will be described.

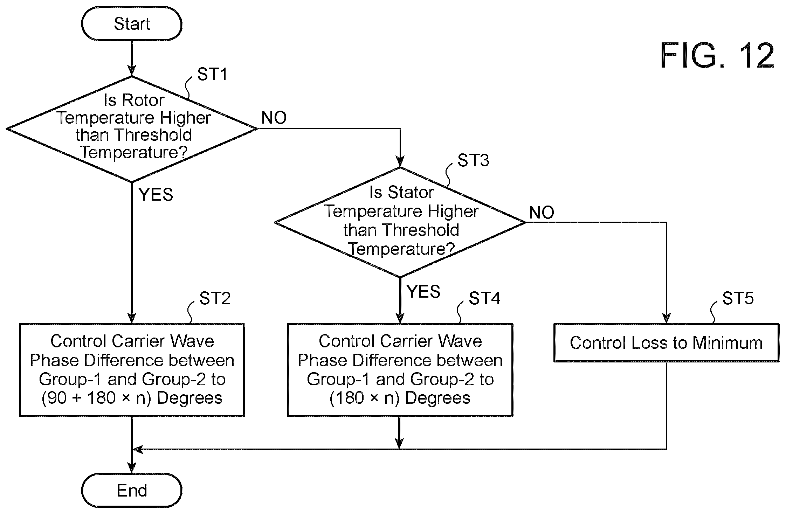

FIG. 12 is a flowchart illustrating the rotary electric machine driving method according to the first embodiment.

The control unit 5 determines whether or not the temperature of the rotor included in the rotary electric machine 2 is higher than a threshold temperature (step ST1). When the rotor temperature is higher than the threshold temperature (step ST1; YES), the control unit 5 performs control in such a manner that the carrier wave phase difference between the group-1 and the group-2 becomes (90 + 180 × n) degrees (step ST2). Here, n represents an integer.

The rotor temperature is, for example, the temperature of a permanent magnet in a case where the rotary electric machine 2 is a permanent magnet rotary electric machine, and is the temperature of a rotor bar or an end ring when the rotary electric machine 2 is an induction rotary electric machine. In a case where the rotary electric machine 2 is a permanent magnet synchronous rotary electric machine, the threshold temperature corresponding to the rotor is set to a temperature lower than the temperature at which demagnetization of the permanent magnet occurs. The likelihood of demagnetization varies depending on the material of the permanent magnet. For example, a permanent magnet containing a large amount of a rare earth element such as dysprosium or terbium has a large coercive force, and is less likely to cause demagnetization. However, the permanent magnet to which a large amount of rare earth elements are added has a disadvantage that the price is high and the residual magnetic flux density is also lowered.

The rotary electric machine driving device 1 can use a permanent magnet having a large residual magnetic flux density at low cost while suppressing the addition of rare earth elements by switching the phase difference of the plurality of groups of carrier waves in accordance with the threshold temperature. In a case where the rotary electric machine 2 is an induction rotary electric machine, the threshold temperature is set by resistance values of the designed rotor bar and end ring.

The resistance values of the rotor bars and the end rings increase as the temperature of the rotor bars and the end rings rise together. The rotor loss increases as the resistance values of the rotor bar and the end ring increase, and thus the threshold temperature of the rotor can be set by setting the upper limit resistance value of the rotor bar and the end ring at the time of design. By setting the threshold temperature of the rotor in accordance with the upper limit resistance value of the rotor bar and the end ring, an increase in rotor loss can be prevented.

The threshold temperature may be set in accordance with the upper limit temperature of the bearing of the rotary electric machine **2.** When the temperature of the bearing rises, the lubricant deteriorates and the life of the bearing is shortened, so that the use upper limit temperature is set. Therefore, the threshold temperature can be set to a value lower than the use upper limit temperature of the bearing.

When the rotor temperature is higher than the threshold temperature, the rotary electric machine driving device 1 controls the carrier wave phase difference between the group-1 and the group-2 to be (90 + 180 × n) degrees, thereby being able to reduce the rotor loss and suppress the temperature rise of the rotor.

When the rotor temperature is equal to or lower than the threshold temperature (step ST1; NO), the control unit 5 determines whether or not the temperature of the stator included in the rotary electric machine 2 is higher than the threshold temperature (step ST3). When the stator temperature is higher than the threshold temperature (step ST3; YES), the control unit 5 performs control in such a manner that the carrier wave phase difference between the group-1 and the group-2 becomes (180 × n) degrees (step ST4).

The stator temperature is the temperature of the winding of the stator. The threshold temperature corresponding to the stator is set in accordance with the heat resistant temperature of the magnet wire. The heat resistant temperature of the magnet wire is set in accordance with the heat resistant temperature of the material used for the insulating film. For example, the threshold temperature of the stator temperature is set to a temperature lower than the heat resistant temperature of the magnet wire.

The stator temperature may be a temperature of a core such as a tooth or a core back of the stator.

By calculating the temperature of the winding of the stator by the thermal network from the temperature of the core, it is possible to protect the insulation film of the winding of the stator from deterioration. When the stator temperature is higher than the threshold temperature, the control unit 5 performs control in such a manner that the carrier wave phase difference between the group-1 and the group-2 becomes (180 × n) degrees, whereby the stator loss can be reduced and the temperature rise of the stator can be suppressed.

When the stator temperature is equal to or lower than the threshold temperature (step ST3; NO), the control unit 5 controls the loss to the minimum (step ST5). Here, the control unit 5 controls the carrier wave phase difference between the group-1 and the group-2 in such a manner as to minimize the loss generated in the rotary electric machine **2.**

For example, the control unit 5 holds a carrier wave phase difference between the group-1 and the group-2 in which the loss of the rotary electric machine 2 is minimized as a map in advance for each operating point in the rotational speed and the torque characteristic. The control unit 5 can switch the carrier wave phase difference between the group-1 and the group-2 regardless of the state of any operating point even when the loss is minimized in the flowchart illustrated in FIG. 12. A series of processes illustrated in FIG. 12 is performed at regular time intervals.

Note that the map in which the carrier wave phase difference between the group-1 and the group-2 that minimizes the loss of the rotary electric machine 2 is set can be calculated by finite element method analysis or actual measurement using an actual machine.

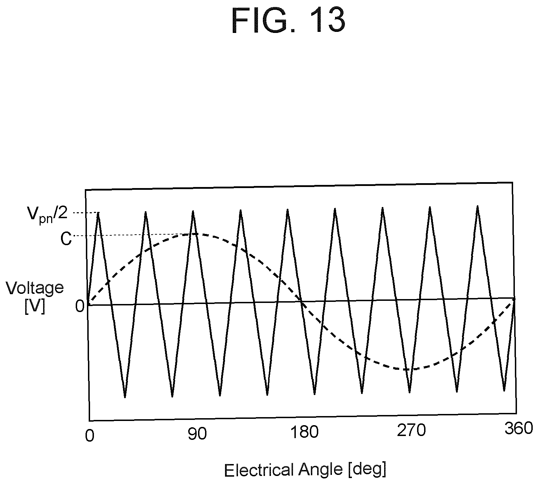

FIG. 13 is a waveform diagram illustrating a triangular wave carrier wave and a phase voltage signal wave. In FIG. 13, the difference between the maximum value and the minimum value of the triangular wave is DC voltage Vpn. The difference between the maximum value of the triangular wave and zero has an amplitude of Vpn/2. On the other hand, the phase voltage signal wave is a waveform generated by the control unit 5 on the basis of the three-phase voltage command value. The modulation rate is defined by a peak value C of the phase voltage signal wave with respect to the amplitude of the triangular wave carrier wave. That is, the modulation rate = phase voltage peak value/(Vpn/2).

For example, when performing synchronous control in which the carrier frequency is an integer multiple of the fundamental frequency f, the control unit 5 can reduce harmonic components by aligning the carrier wave phase and the fundamental phase of the carrier to zero. Thus, the loss of the rotary electric machine 2 can be reduced, and the temperature rise can be suppressed. On the other hand, even when performing asynchronous control in which the carrier frequency is not an integer multiple of the fundamental frequency f, the control unit 5 controls the carrier wave phase difference of each group in accordance with the temperature of the rotary electric machine 2. Thus, the loss of the rotary electric machine 2 can be reduced, and the temperature rise can be suppressed.

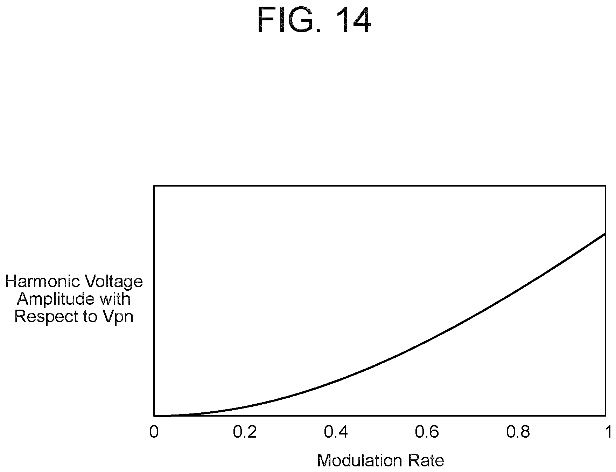

FIG. 14 is a graph illustrating a harmonic voltage amplitude with respect to the DC voltage Vpn in the carrier primary component with respect to the modulation rate. As the harmonic voltage with respect to the DC voltage in the carrier primary component, a frequency fc ± 2f component appears. FIG. 14 illustrates characteristics of the frequency fc ± 2f component divided by the DC voltage Vpn with respect to the modulation rate. As illustrated in FIG. 14, the DC voltage Vpn is constant, the carrier primary component increases as the modulation rate increases. That is, as the modulation rate increases, the loss caused by the carrier primary component increases.

The frequency of the carrier primary component is lower than that of the carrier secondary component, and thus the carrier primary component also affects a rotor located at a position separated from the stator by a gap in the rotary electric machine 2. Therefore, the control unit 5 can suppress the temperature rise of the rotor by controlling the modulation rate to be small. In order to reduce the modulation rate, it is only required to reduce the phase voltage peak value C, and in order to reduce the phase voltage peak value C, it is only required to increase the weak current. That is, it is only required to increase the current amplitude and the current advance angle of the phase current.

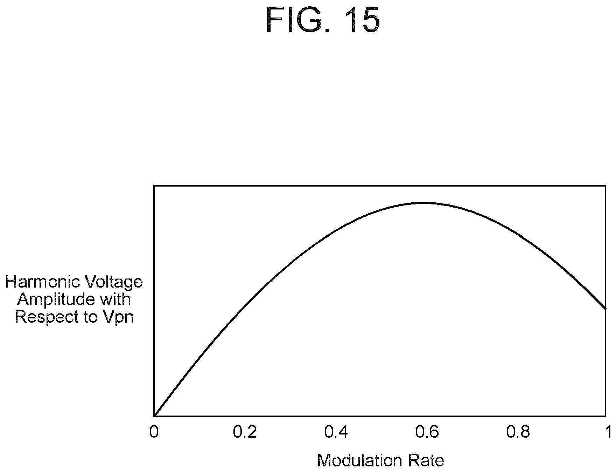

FIG. 15 is a graph illustrating the harmonic voltage amplitude with respect to the DC voltage Vpn in the carrier secondary component with respect to the modulation rate. As the harmonic voltage with respect to the DC voltage Vpn in the carrier secondary component, a frequency 2fc ± f component appears. FIG. 15 illustrates characteristics of the frequency 2fc ± f component divided by the DC voltage Vpn with respect to the modulation rate. As illustrated in FIG. 15, the carrier secondary component is maximized at the modulation rate 0.6. The carrier secondary component has a significant impact on the losses occurring in the stator windings or cores. Thus, the control unit 5 controls the modulation rate to reduce the loss caused by the carrier secondary component, so that the temperature rise of the stator can be suppressed.

As illustrated in FIG. 15, the loss caused by the carrier secondary component has a tendency changing with the modulation rate 0.6 as a boundary, and thus the control unit 5 only needs to perform control in such a manner that the modulation rate becomes large in a case where the modulation rate is larger than the modulation rate 0.6. In order to increase the modulation rate, it is only required to increase the phase voltage peak value C, and in order to increase the phase voltage peak value C, it is only required to decrease the weak current. That is, the current amplitude and the current advance angle of the phase current only need to be reduced.

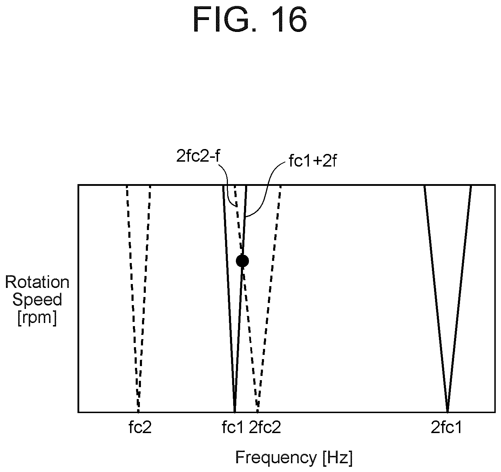

FIG. 16 is a graph illustrating carrier harmonic components appearing in the group-1 and the group-2 with respect to the frequency and the rotation speed. In FIG. 16, the carrier frequency of the group-1 is fc1, and the carrier frequency of the group-2 is fc2. When the control unit 5 switches the carrier wave phase difference between the group-1 and the group-2 in accordance with the temperature of the rotary electric machine 2, if the carrier frequencies of the group-1 and the group-2 are made equal, frequency components caused by the carrier match. Therefore, harmonic components caused by the carrier can be canceled out.

On the other hand, even when the carrier frequencies of the group-1 and the group-2 are different from each other, it is possible to cancel out the harmonic components caused by the carrier by setting the carrier frequency of the group-1 and the carrier frequency of the group-2 to predetermined values. For example, by controlling the carrier frequencies of the group-1 and the group-2 in such a manner as to satisfy fc1 + 2f = 2fc2 - f, the control unit 5 can cancel out the group-1 of carrier primary sideband waves and the group-2 of carrier secondary sideband waves, and can reduce the loss caused by the carrier.

When the rising temperature of the switching element is different in each group of power converting circuits, the control unit 5 sets the carrier frequency of each group to a different value, thereby reducing the switching loss of the switching element having the highest temperature. The control unit 5 controls the carrier frequencies of the group-1 and the group-2 in such a manner that fc1 + 2f = 2fc2 - f is satisfied even when the carrier frequencies of the respective groups are set to different values, and controls the carrier wave phase difference between the group-1 and the group-2 in accordance with the temperature of the rotary electric machine 2. Thus, the rotary electric machine driving device 1 can selectively suppress the temperature rise of the stator and the rotor.

In a case where the rotary electric machine 2 is a permanent magnet synchronous rotary electric machine, an eddy current due to harmonic magnetic flux is generated in the permanent magnet. The eddy current generated in the permanent magnet depends on the carrier frequency and the thickness in a magnetization direction of the permanent magnet. The harmonic magnetic flux caused by the carrier secondary component is a 2fc ± f component, the eddy current generated in the permanent magnet is represented by the square of the harmonic magnetic flux, and the eddy current generated in the permanent magnet is a 4fc component. The 4fc component of the eddy current generated in the permanent magnet is calculated as the sum of products of the 2fc + f component and the 2fc-f component. In order to reduce the 4fc component of the eddy current generated in the permanent magnet, the carrier frequency only needs to be set in consideration of the skin thickness.

In order to remove the 4fc component of the eddy current generated in the permanent magnet when the carrier frequency of the power converter is fc, the thickness of the permanent magnet in the magnetization direction is W, the relative permeability of the permanent magnet is µᵣ, the conductivity of the permanent magnet is σ, and the vacuum permeability is µ₀, the carrier frequency fc only needs to be determined in such a manner as to satisfy the relationship of fc > 4/(πµᵣµ₀σW²).

The control unit 5 reduces the eddy current component generated in the permanent magnet more than or equal to a specific component, so that the loss caused by the carrier of the stator and the rotor becomes clearer. Thus, in a case where the carrier wave phase difference between the group-1 and the group-2 is switched, the control unit 5 can more effectively suppress the temperature rise at the portion where the temperature rise is desired to be suppressed.

In a case where the semiconductor switching element included in the power converter is an element using silicon carbide (SiC), it is possible to switch the carrier wave phase at high speed using heat dissipation. The control unit 5 can more effectively suppress the temperature rise at the specific portion of the rotary electric machine 2 by switching the carrier wave phase difference of each group.

A multi-level inverter may be used as the power converter. Even in the case of using the multi-level inverter, the control unit 5 can suppress the temperature rise at the specific portion of the rotary electric machine 2 by switching the carrier wave phase difference of each group.

Next, a hardware configuration that implements the functions of the control unit 5 will be described.

The current command generating unit 51, the three-phase to two-phase converting unit 52, the current control unit 53, the two-phase to three-phase converting unit 54, the carrier wave generating unit 55, and the PWM signal generating unit 56 included in the control unit 5 are implemented by a processing circuit. That is, the control unit 5 includes a processing circuit for executing the processing from step ST1 to step ST5 illustrated in FIG. 12. The processing circuit may be dedicated hardware, or may be a central processing unit (CPU) that executes a program stored in a memory.

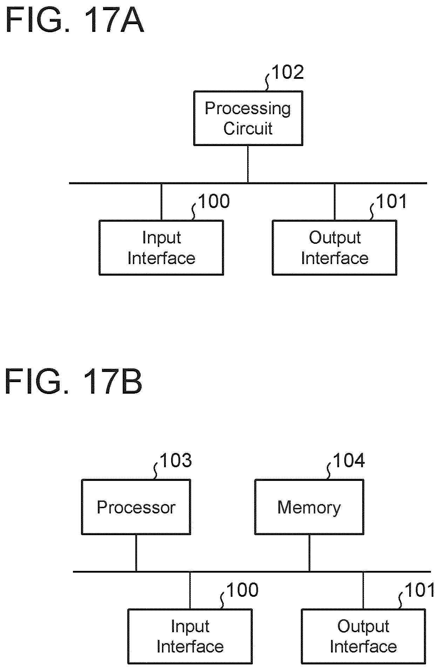

FIG. 17A is a block diagram illustrating a hardware configuration that implements the functions of the control unit 5. FIG. 17B is a block diagram illustrating a hardware configuration for executing software for implementing the functions of the control unit 5. In FIGS. 17 A and 17B, an input interface 100 is, for example, an interface that relays signals output from the rotation angle sensor 21, the temperature detecting unit 22, the rotary electric machine current detecting unit 33, and the rotary electric machine current detecting unit 43 to the control unit 5. An output interface 101 is an interface that relays an ON/OFF control signal output from the control unit 5 to the group-1 power converting circuit 32 and the group-2 power converting circuit 42.

In a case where the processing circuit is the processing circuit 102 of dedicated hardware illustrated in FIG. 17A, the processing circuit 102 corresponds to, for example, a single circuit, a composite circuit, a programmed processor, a parallel programmed processor, an application specific integrated circuit (ASIC), a field-programmable gate array (FPGA), or a combination thereof.

The functions of the current command generating unit 51, the three-phase to two-phase converting unit 52, the current control unit 53, the two-phase to three-phase converting unit 54, the carrier wave generating unit 55, and the PWM signal generating unit 56 included in the control unit 5 may be implemented by separate processing circuits, or these functions may be collectively implemented by one processing circuit.

In a case where the processing circuit is the processor 103 illustrated in FIG. 17B, the functions of the current command generating unit 51, the three-phase to two-phase converting unit 52, the current control unit 53, the two-phase to three-phase converting unit 54, the carrier wave generating unit 55, and the PWM signal generating unit 56 included in the control unit 5 are implemented by software, firmware, or a combination of software and firmware. Note that the software or firmware is described as a program and stored in a memory 104.

The processor 103 reads and executes the program stored in the memory 104 to implement the functions of the current command generating unit 51, the three-phase to two-phase converting unit 52, the current control unit 53, the two-phase to three-phase converting unit 54, the carrier wave generating unit 55, and the PWM signal generating unit 56 included in the control unit 5. For example, the control unit 5 includes the memory 104 for storing a program that, when executed by the processor 103, results in execution of the processing of steps ST1 to ST5 illustrated in FIG. 12. These programs cause a computer to execute procedures or methods of processing performed by the control unit 5. The memory 104 may be a computer-readable storage medium storing a program for causing a computer to function as the control unit 5.

The memory 104 corresponds to a nonvolatile or volatile semiconductor memory such as a random access memory (RAM), a read only memory (ROM), a flash memory, an erasable programmable read only memory (EPROM), or an electrically-EPROM (EEPROM), a magnetic disk, a flexible disk, an optical disk, a compact disk, a mini disk, or a DVD.

A part of the functions of the current command generating unit 51, the three-phase to two-phase converting unit 52, the current control unit 53, the two-phase to three-phase converting unit 54, the carrier wave generating unit 55, and the PWM signal generating unit 56 included in the control unit 5 may be implemented by dedicated hardware, and the rest may be implemented by software or firmware. For example, the functions of the current command generating unit 51, the three-phase to two-phase converting unit 52, the current control unit 53, and the two-phase to three-phase converting unit 54 are implemented by the processing circuit 102 that is dedicated hardware, and the functions of the carrier wave generating unit 55 and the PWM signal generating unit 56 are implemented by the processor 103 reading and executing a program stored in the memory 104. As described above, the processing circuit can implement the above functions by hardware, software, firmware, or a combination thereof.

As described above, the rotary electric machine driving device 1 according to the first embodiment drives the rotary electric machine 2 including a stator including three-phase stator windings driven by two systems of a group-1 and a group-2, and a rotor as a rotating body, and includes the group-1 power converter 3 and the group-2 power converter 4 provided corresponding to the respective groups, to convert DC power input from the DC power supply 7 into a phase current, and output the phase current to the stator windings of the respective groups, and the control unit 5 to output a control signal generated on the basis of a carrier wave to control the group-1 power converter 3 and the group-2 power converter 4, and switch a phase of the carrier wave in each of the groups when a temperature of a part of the rotary electric machine 2 is higher than a threshold temperature. When the temperature of a part of the rotary electric machine 2 is higher than the threshold temperature, by switching the phase of the carrier wave in each of the groups, the rotary electric machine driving device 1 can reduce a loss generated in each part of the rotary electric machine 2 and suppress the temperature rise at a portion exceeding the threshold temperature.

In the rotary electric machine driving device 1 according to the first embodiment, when a temperature of the stator of the rotary electric machine 2 is higher than the threshold temperature or a temperature of the rotor is higher than the threshold temperature, the control unit 5 changes a phase difference of the carrier wave in each of the groups. Thus, the rotary electric machine driving device 1 can reduce the loss generated in each part of the rotary electric machine 2 and suppress the temperature rise at the portion exceeding the threshold temperature.

In the rotary electric machine driving device 1 according to the first embodiment, the rotary electric machine 2 is a multiple rotary electric machine including three-phase stator windings driven by two systems of the group-1 and the group-2. When a temperature of the stator of the rotary electric machine 2 is higher than the threshold temperature or a temperature of the rotor is higher than the threshold temperature, the control unit 5 changes a phase difference of the carrier waves in each of the groups. Thus, the rotary electric machine driving device 1 can reduce the loss generated in each part of the rotary electric machine 2 and suppress the temperature rise at the portion exceeding the threshold temperature.

In the rotary electric machine driving device 1 according to the first embodiment, when the temperature of the stator is lower than the threshold temperature and the temperature of the rotor is lower than the threshold temperature, the control unit 5 sets the phase difference of the carrier waves in each of the groups in such a manner that a loss of the rotary electric machine 2 is minimized. Thus, the rotary electric machine driving device 1 can reduce the loss generated in each part of the rotary electric machine 2 and suppress the temperature rise at the portion exceeding the threshold temperature.

In the rotary electric machine driving device 1 according to the first embodiment, in a case of synchronous control in which a carrier frequency of the carrier wave is an integer multiple of a fundamental frequency, the control unit 5 aligns a phase of the carrier wave and a phase of the fundamental wave to zero. Thus, the harmonic components can be reduced, so that the rotary electric machine driving device 1 can reduce the loss of the rotary electric machine 2 and suppress the temperature rise.

In the rotary electric machine driving device 1 according to the first embodiment, in the stator windings of the group-1 and the group-2, the windings are configured at intervals of an electrical angle of 30 degrees. Since a plurality of groups of windings can be arranged in one pole, the rotary electric machine driving device 1 can cancel out harmonics between the groups, and can reduce loss and vibration.

In the rotary electric machine driving device 1 according to the first embodiment, the control unit 5 performs control in such a manner that a phase current output from the group-1 power converter 3 to the stator windings of the group-1 and a phase current output from the group-2 power converter 4 to the stator windings of the group-2 have equal current amplitudes, and performs control in such a manner that a current phase difference between the group-1 and the group-2 has an electrical angle of 30 degrees. Thus, the rotary electric machine driving device 1 can reduce the loss generated in each part of the rotary electric machine 2 and suppress the temperature rise at the portion exceeding the threshold temperature.

The rotary electric machine driving device 1 according to the first embodiment is the group-1 power converter 3 to output a phase current to the stator windings of the group-1 and the group-2 power converter 4 to output a phase current to the stator windings of the group-2. The control unit 5 performs control in such a manner that the carrier frequencies of the group-1 and the group-2 are equal to each other. Thus, the rotary electric machine driving device 1 can reduce the loss generated in each part of the rotary electric machine 2 and suppress the temperature rise at the portion exceeding the threshold temperature.

In the rotary electric machine driving device 1 according to the first embodiment, when the temperature of the rotor is higher than the threshold temperature and n represents an integer, the control unit 5 performs control in such a manner that the phase difference of the carrier waves of the group-1 and the group-2 becomes (90 + 180 × n) degrees. Thus, the rotary electric machine driving device 1 can suppress an increase in the rotor temperature.

In the rotary electric machine driving device 1 according to the first embodiment, when the temperature of the rotor is higher than the threshold temperature, the control unit 5 increases a current amplitude and a current advance angle of the phase current output from the group-1 power converter 3 to the stator windings of the group-1 and the phase current output from the group-2 power converter 4 to the stator windings of the group-2. Thus, the rotary electric machine driving device 1 can suppress an increase in the stator temperature.

In the rotary electric machine driving device 1 according to the first embodiment, when the temperature of the stator is higher than the threshold temperature and n represents an integer, the control unit 5 performs control in such a manner that the phase difference of the carrier waves of the group-1 and the group-2 becomes (180 × n) degrees. Thus, the rotary electric machine driving device 1 can suppress an increase in the stator temperature.

In the rotary electric machine driving device 1 according to the first embodiment, when the temperature of the stator is higher than the threshold temperature and a modulation rate is larger than a threshold, the control unit 5 decreases the current amplitude and the current advance angle of the phase currents output from the power converters 3 and 4 of the group-1 and the group-2. Thus, the rotary electric machine driving device 1 can suppress an increase in the stator temperature.

In the rotary electric machine driving device 1 according to the first embodiment, the threshold value for the modulation rate is 0.6. The rotary electric machine driving device 1 can suppress the temperature rise of the stator by controlling the modulation rate using this threshold value to reduce the loss caused by the carrier secondary component.

The rotary electric machine driving device 1 according to the first embodiment is the group-1 power converter 3 to output a phase current to the stator windings of the group-1 and the group-2 power converter 4 to output a phase current to the stator windings of the group-2. The control unit 5 controls the carrier frequencies of the group-1 and the group-2 in such a manner as to satisfy a relationship represented by fc1 + 2f = 2fc2 where f is a fundamental frequency of the rotary electric machine 2, fc1 is a carrier frequency of the carrier wave of the group-1 power converter 3, and fc2 is a carrier frequency of the carrier wave of the group-2 power converter 4. Thus, the rotary electric machine driving device 1 can selectively suppress the temperature rise of the stator.

In the rotary electric machine driving device 1 according to the first embodiment, the rotary electric machine 2 includes a permanent magnet as the rotor. The control unit 5 controls the group-1 power converter 3 and the group-2 power converter 4 in such a manner that the carrier frequency satisfies a relationship represented by fc > 4/(πµᵣµ₀σW²), where fc (Hz) is a carrier frequency, W (m) is a thickness of the permanent magnet in a magnetization direction, µᵣ is a relative permeability of the permanent magnet, σ (S/m) is a conductivity of the permanent magnet, and µ₀ is a vacuum permeability.

In the rotary electric machine driving device 1, the loss caused by the carrier of the stator and the rotor becomes clearer by reducing the eddy current component generated in the permanent magnet by a specific component or more. Thus, in a case where the carrier wave phase difference between the group-1 and the group-2 is switched, it is possible to more effectively suppress the temperature rise at the portion where the temperature rise is desired to be suppressed.

In the rotary electric machine driving device 1 according to the first embodiment, the group-1 power converter 3 and the group-2 power converter 4 include an inverter circuit in which six semiconductor switching elements using silicon carbide are connected by a full bridge. By controlling the inverter circuit to switch the carrier wave phase difference of each group, the rotary electric machine driving device 1 can more effectively suppress a temperature rise at a specific portion of the rotary electric machine 2**.**

In the rotary electric machine driving method according to the first embodiment, when a temperature of the rotor is higher than a threshold temperature and n represents an integer, the control unit 5 performs control in such a manner that a phase difference of the carrier waves of group-1 and group-2 becomes (90 + 180 × n) degrees, when a temperature of the stator is higher than a threshold temperature and n represents an integer, the control unit 5 performs control in such a manner that the phase difference of the carrier waves of the group-1 and the group-2 becomes (180 × n) degrees, and when the temperature of the stator is lower than the threshold temperature and the temperature of the rotor is lower than the threshold temperature, the control unit 5 sets the phase difference of the carrier waves in the respective groups in such a manner that a loss of the rotary electric machine 2 is minimized. By the control unit 5 executing the above method, it is possible to achieve the rotary electric machine driving device 1 capable of reducing the loss generated in each portion of the rotary electric machine 2 and suppressing the temperature rise at the portion exceeding the threshold temperature.

Hereinafter, various aspects of the present disclosure will be collectively described as supplementary notes.

### (Supplementary Note 1)

A rotary electric machine driving device that drives a rotary electric machine including a stator including a plurality of groups of stator windings of three or more phases, and a rotor as a rotating body, the rotary electric machine driving device including:
a plurality of groups of power converters provided corresponding to the respective groups, to convert DC power input from a power supply into a phase current, and output the phase current to the stator windings of the respective groups; and
a control unit to output a control signal generated on the basis of a carrier wave to control the power converters of the respective groups, and switch a phase of the carrier wave in each of the groups when a temperature of a part of the rotary electric machine is higher than a threshold temperature.

### (Supplementary Note 2)

The rotary electric machine driving device according to supplementary note 1, in which
when a temperature of the stator of the rotary electric machine is higher than the threshold temperature or a temperature of the rotor is higher than the threshold temperature, the control unit changes a phase difference of the carrier wave in each of the groups.

### (Supplementary Note 3)

The rotary electric machine driving device according to supplementary note 1, in which
the rotary electric machine is a multiple rotary electric machine including the stator windings of three phases driven by two systems of group-1 and group-2, and
when a temperature of the stator of the rotary electric machine is higher than the threshold temperature or a temperature of the rotor is higher than the threshold temperature, the control unit changes a phase difference of the carrier wave in each of the groups.

### (Supplementary Note 4)

The rotary electric machine driving device according to supplementary note 3, in which
when the temperature of the stator is lower than the threshold temperature and the temperature of the rotor is lower than the threshold temperature, the control unit sets the phase difference of the carrier wave in each of the groups in such a manner that a loss of the rotary electric machine is minimized.

### (Supplementary Note 5)

The rotary electric machine driving device according to any one of supplementary notes 2 to 4, in which
in a case of synchronous control in which a carrier frequency of the carrier wave is an integer multiple of a fundamental frequency, the control unit aligns a phase of the carrier wave and a phase of the fundamental wave to zero.

### (Supplementary Note 6)

The rotary electric machine driving device according to supplementary note **3,** in which
in the stator windings of the group-1 and the group-2, the windings are configured at intervals of an electrical angle of 30 degrees.

### (Supplementary Note 7)

The rotary electric machine driving device according to supplementary note 6, in which
the control unit performs control in such a manner that a phase current output from the power converter of the group-1 to the stator windings of the group-1 and a phase current output from the power converter of the group-2 to the stator windings of the group-2 have equal current amplitudes, and performs control in such a manner that a current phase difference of the group-1 and the group-2 has an electrical angle of 30 degrees.

### (Supplementary Note 8)

The rotary electric machine driving device according to supplementary note **3,** in which
the power converters are the power converter of the group-1 to output a phase current to the stator windings of the group-1 and the power converter of the group-2 to output a phase current to the stator windings of the group-2, and the control unit performs control in such a manner that carrier frequencies of the group-1 and the group-2 are equal to each other.

### (Supplementary Note 9)

The rotary electric machine driving device according to supplementary note 8, in which
when the temperature of the rotor is higher than the threshold temperature and n represents an integer, the control unit performs control in such a manner that the phase difference of the carrier waves of the group-1 and the group-2 becomes (90 + 180 × n) degrees.

### (Supplementary Note 10)

The rotary electric machine driving device according to supplementary note 9, in which
when the temperature of the rotor is higher than the threshold temperature, the control unit increases a current amplitude and a current advance angle of the phase current output from the power converter of the group-1 to the stator windings of the group-1 and the phase current output from the power converter of the group-2 to the stator windings of the group-2.

### (Supplementary Note 11)

The rotary electric machine driving device according to supplementary note 8, in which
when the temperature of the stator is higher than the threshold temperature and n represents an integer, the control unit performs control in such a manner that the phase difference of the carrier waves of the group-1 and the group-2 becomes (180 × n) degrees.

### (Supplementary Note 12)

The rotary electric machine driving device according to supplementary note 11, in which
when the temperature of the stator is higher than the threshold temperature and a modulation rate is larger than a threshold, the control unit decreases the current amplitude and the current advance angle of the phase currents output from the power converters of the group-1 and the group-2.

### (Supplementary Note 13)

The rotary electric machine driving device according to supplementary note 12, in which
the threshold for the modulation rate is 0.6.

### (Supplementary Note 14)

The rotary electric machine driving device according to supplementary note 3, in which
the power converting circuit is the power converter of the group-1 to output a phase current to the stator windings of the group-1 and the power converter of the group-2 to output a phase current to the stator windings of the group-2, and
the control unit controls the carrier frequencies of the group-1 and the group-2 in such a manner as to satisfy a relationship represented by fc1 + 2f = 2fc2, where f is a fundamental frequency of the rotary electric machine, fc1 is a carrier frequency of the carrier wave of the power converter of the group-1, and fc2 is a carrier frequency of the carrier wave of the power converter of the group-2.

### (Supplementary Note 15)

The rotary electric machine driving device according to any one of supplementary notes 1 to 14, in which
the rotary electric machine includes a permanent magnet as the rotor, and
the control unit controls the power converters in such a manner that a carrier frequency satisfies a relationship represented by fc > 4/ (πµᵣµ₀σW²), where fc (Hz) is a carrier frequency, W (m) is a thickness of the permanent magnet in a magnetization direction, µᵣ is a relative permeability of the permanent magnet, σ (S/m) is a conductivity of the permanent magnet, and µ₀ is a vacuum permeability.

### (Supplementary Note 16)

The rotary electric machine driving device according to any one of supplementary notes 1 to 15, in which
the power converting circuit includes an inverter circuit in which six semiconductor switching elements using silicon carbide are connected by a full bridge per group.

### (Supplementary Note 17)

A rotary electric machine driving method performed by a rotary electric machine driving device that drives a rotary electric machine including a stator including a plurality of groups of stator windings of three or more phases, and a rotor as a rotating body, the rotary electric machine driving device including:
a plurality of groups of power converters provided corresponding to the respective groups, to convert DC power input from a power supply into a phase current, and output the phase current to the stator windings of the respective groups; and
a control unit to output a control signal generated on the basis of a carrier wave to control the power converters of the respective groups, in which
the control unit performs
control in such a manner that, when a temperature of the rotor is higher than a threshold temperature and n represents an integer, a phase difference of the carrier waves of group-1 and group-2 becomes (90 + 180 × n) degrees,
control in such a manner that, when a temperature of the stator is higher than a threshold temperature and n represents an integer, the phase difference of the carrier waves of the group-1 and the group-2 becomes (180 × n) degrees, and
setting, when the temperature of the stator is lower than the threshold temperature and the temperature of the rotor is lower than the threshold temperature, the phase difference of the carrier waves in each of the groups in such a manner that a loss of the rotary electric machine is minimized.

Note that any component of the embodiment can be modified or any component of the embodiment can be omitted.

### INDUSTRIAL APPLICABILITY

A rotary electric machine driving device according to the present disclosure can be used for, for example, a power conversion device.

### REFERENCE SIGNS LIST

1: rotary electric machine driving device, 2: rotary electric machine, 2a: AC busbar, 3: group-1 power converter, 3a, 3b: DC busbar, 4: group-2 power converter, 5: control unit, 6a, 6b: power switch, 7: DC power supply, 21: rotation angle sensor, 22: temperature detecting unit, 31: group-1 capacitor, 32: group-1 power converting circuit, 33, 43: rotary electric machine current detecting unit, 41: group-2 capacitor, 42: group-2 power converting circuit, 51: current command generating unit, 52: three-phase to two-phase converting unit, 53: current control unit, 54: two-phase to three-phase converting unit, 55: carrier wave generating unit, 56: PWM signal generating unit, 100: input interface, 101: output interface, 102: processing circuit, 103: processor, 104: memory, 201: stator, 202: winding, 211: rotor, 212: permanent magnet, 213: rotor bar, 321 to 326, 421 to 426: switching element

## Claims

1. A rotary electric machine driving device that drives a rotary electric machine including a stator including a plurality of groups of stator windings of three or more phases, and a rotor as a rotating body, the rotary electric machine driving device comprising:
a plurality of groups of power converters provided corresponding to the respective groups, to convert DC power input from a power supply into a phase current, and output the phase current to the stator windings of the respective groups; and
a control unit to output a control signal generated on a basis of a carrier wave to control the power converters of the respective groups, and switch a phase of the carrier wave in each of the groups when a temperature of a part of the rotary electric machine is higher than a threshold temperature.

2. The rotary electric machine driving device according to claim 1, wherein
when a temperature of the stator of the rotary electric machine is higher than the threshold temperature or a temperature of the rotor is higher than the threshold temperature, the control unit changes a phase difference of the carrier wave in each of the groups.

3. The rotary electric machine driving device according to claim 1, wherein
the rotary electric machine is a multiple rotary electric machine including the stator windings of three phases driven by two systems of group-1 and group-2, and
when a temperature of the stator of the rotary electric machine is higher than the threshold temperature or a temperature of the rotor is higher than the threshold temperature, the control unit changes a phase difference of the carrier wave in each of the groups.

4. The rotary electric machine driving device according to claim 3, wherein
when the temperature of the stator is lower than the threshold temperature and the temperature of the rotor is lower than the threshold temperature, the control unit sets the phase difference of the carrier wave in each of the groups in such a manner that a loss of the rotary electric machine is minimized.

5. The rotary electric machine driving device according to any one of claims 2 to 4, wherein
in a case of synchronous control in which a carrier frequency of the carrier wave is an integer multiple of a fundamental frequency, the control unit aligns a phase of the carrier wave and a phase of the fundamental wave to zero.

6. The rotary electric machine driving device according to claim 3, wherein
in the stator windings of the group-1 and the group-2, the windings are configured at intervals of an electrical angle of 30 degrees.

7. The rotary electric machine driving device according to claim 6, wherein
the control unit performs control in such a manner that a phase current output from the power converter of the group-1 to the stator windings of the group-1 and a phase current output from the power converter of the group-2 to the stator windings of the group-2 have equal current amplitudes, and performs control in such a manner that a current phase difference of the group-1 and the group-2 has an electrical angle of 30 degrees.

8. The rotary electric machine driving device according to claim 3, wherein
the power converters are the power converter of the group-1 to output a phase current to the stator windings of the group-1 and the power converter of the group-2 to output a phase current to the stator windings of the group-2, and the control unit performs control in such a manner that carrier frequencies of the group-1 and the group-2 are equal to each other.

9. The rotary electric machine driving device according to claim 8, wherein
when the temperature of the rotor is higher than the threshold temperature and n represents an integer, the control unit performs control in such a manner that the phase difference of the carrier waves of the group-1 and the group-2 becomes (90 + 180 × n) degrees.

10. The rotary electric machine driving device according to claim 9, wherein
when the temperature of the rotor is higher than the threshold temperature, the control unit increases a current amplitude and a current advance angle of the phase current output from the power converter of the group-1 to the stator windings of the group-1 and the phase current output from the power converter of the group-2 to the stator windings of the group-2.

11. The rotary electric machine driving device according to claim 8, wherein
when the temperature of the stator is higher than the threshold temperature and n represents an integer, the control unit performs control in such a manner that the phase difference of the carrier waves of the group-1 and the group-2 becomes (180 × n) degrees.

12. The rotary electric machine driving device according to claim 11, wherein
when the temperature of the stator is higher than the threshold temperature and a modulation rate is larger than a threshold, the control unit decreases the current amplitude and the current advance angle of the phase currents output from the power converters of the group-1 and the group-2.

13. The rotary electric machine driving device according to claim 12, wherein
the threshold for the modulation rate is 0.6.

14. The rotary electric machine driving device according to claim 3, wherein
the power converters are the power converter of the group-1 to output a phase current to the stator windings of the group-1 and the power converter of the group-2 to output a phase current to the stator windings of the group-2, and
the control unit controls the carrier frequencies of the group-1 and the group-2 in such a manner as to satisfy a relationship represented by fc1 + 2f = 2fc2 - f, where f is a fundamental frequency of the rotary electric machine, fc1 is a carrier frequency of the carrier wave of the power converter of the group-1, and fc2 is a carrier frequency of the carrier wave of the power converter of the group-2.

15. The rotary electric machine driving device according to claim 1, wherein
the rotary electric machine includes a permanent magnet as the rotor, and
the control unit controls the power converters in such a manner that a carrier frequency satisfies a relationship represented by fc > 4/ (πµᵣµ₀σW²), where fc (Hz) is a carrier frequency, W (m) is a thickness of the permanent magnet in a magnetization direction, µᵣ is a relative permeability of the permanent magnet, σ (S/m) is a conductivity of the permanent magnet, and µ_{c} is a vacuum permeability.

16. The rotary electric machine driving device according to claim 1, wherein
the power converters include an inverter circuit in which six semiconductor switching elements using silicon carbide are connected by a full bridge per group.

17. A rotary electric machine driving method performed by a rotary electric machine driving device that drives a rotary electric machine including a stator including a plurality of groups of stator windings of three or more phases, and a rotor as a rotating body, the rotary electric machine driving device including:
a plurality of groups of power converters provided corresponding to the respective groups, to convert DC power input from a power supply into a phase current, and output the phase current to the stator windings of the respective groups; and
a control unit to output a control signal generated on a basis of a carrier wave to control the power converters of the respective groups, wherein
the control unit performs
control in such a manner that, when a temperature of the rotor is higher than a threshold temperature and n represents an integer, a phase difference of the carrier waves of group-1 and group-2 becomes (90 + 180 × n) degrees,
control in such a manner that, when a temperature of the stator is higher than a threshold temperature and n represents an integer, the phase difference of the carrier waves of the group-1 and the group-2 becomes (180 × n) degrees, and
setting, when the temperature of the stator is lower than the threshold temperature and the temperature of the rotor is lower than the threshold temperature, the phase difference of the carrier waves in each of the groups in such a manner that a loss of the rotary electric machine is minimized.
